# EUROPÄISCHE PATENTSCHRIFT

(11) **EP 3 764 602 B1**
(45) Veröffentlichungstag und Bekanntmachung des Hinweises auf die Patenterteilung: **27.07.2022**
(21) Anmeldenummer: 20183098.1
(22) Anmeldetag: 30.06.2020
(51) Int. Cl.: H04L 12/40

(54) **ONE-WIRE BUS MIT EINEM ODER MEHREREN ONE-WIRE-DEVICES**
ONE-WIRE BUS WITH ONE OR MORE ONE-WIRE-DEVICES
BUS MONOFILAIRE DOTÉ D'UN OU DE PLUSIEURS DISPOSITIFS MONOFILAIRES

(30) Priorität: 08.07.2019 DE 102019118452
(43) Veröffentlichungstag der Anmeldung: 13.01.2021
(73) Patentinhaber: ESERA GmbH, 87600 Kaufbeuren (DE)
(72) Erfinder: GEISLER, Andreas, 87600 Kaufbeuren (DE)
(74) Vertreter: VKK Patentanwälte PartG mbB

(56) Entgegenhaltungen:
- EP-A1- 3 392 085
- EP-A2- 1 533 673
- DE-A1-102013 201 106
- US-A1- 2016 323 287

## Beschreibung

Die Erfindung betrifft ein One-Wire Bus System mit mindestens einem One-wire-Device, das einen Datenendpunkt mit einer Identifikationsadresse nebst Angabe der Device-Familie aufweist, wobei dieses System eine erweiterte Funktionalität, insbesondere eine vereinfachte Austauschbarkeit aufweist.

Ein One Wire Bus kommt mit einer Datenader aus, die sowohl als Stromversorgung als auch als Sende- und Empfangsleitung genutzt wird. Ein solcher One Wire Bus dient bevorzugt der Anbindung von sogenannten One-Wire-Devices an einen Rechner oder an eine übergeordnete Feldbus-Ebene, also von Schaltungen, die mindestens einen oder mehrere Sensoren und/oder mindestens einen oder mehrere Aktuatoren oder Aktuator-Ansteuerungen enthalten. Ein One-Wire-Bus dient demnach der Kommunikation zwischen den Komponenten eines Gerätes, z. B. zur Erfassung des Akkuzustandes in einem mobilen Datenerfassungsgerät. Charakteristisch für den One-Wire-Bus sind seine einfache, flexible Verdrahtung, bei der Kombinationen linearer und sternförmiger Topologien erlaubt sind, die Möglichkeit, von einem Master aus eine große Zahl von One-Wire-Devices mit Datenraten bis zu 16.3 kbit/s oder 163 kbit/s im Overdrive-Mode adressieren und im Halb-Duplex-Verfahren auslesen sowie beschreiben zu können.

Im Stand der Technik bekannt sind protokollkonforme One-Wire-Devices, die eine einmalige sogenannte Identifikations-Adresse aufweisen. In dieser Identifikations-Adresse ist auch die sogenannte Device Familie des One-Wire-Devices codiert.

Der Busmaster fragt typischerweise beim Hochfahren des Busses die Identifikations-Adressen und Prüfsummen, die sogenannten CRC, aller One-Wire-Devices am Bus ab und legt intern eine Liste der One-Wire-Devices und deren Device Familie an. Diese Liste kann weitere Informationen über die One-Wire-Devices enthalten.

Eine für die Interpretation von Sensorwerten eines Devices erforderliche funktionelle Zuordnung erfolgt anwenderseitig bei der Inbetriebnahme des Busses. Dabei kann beispielsweise für ein gegebenes One-Wire-Device in einem Datensatz hinterlegt sein, dass es die Temperatur, oder die Luftgeschwindigkeit hinter einem Ventilator oder die Batteriespannung in einer USV-Einheit "01" eines Rechenzentrums liefert. Dies hat jedoch den Nachteil, dass die funktionelle Zuordnung des One-Wire-Devices am Bus nach einem Austausch verloren geht.

Wird ein One-Wire-Device gemäß dem Stand der Technik im obigen Beispiel durch ein baugleiches ersetzt, hat das ersetzende One-Wire-Device eine neue Identifikations-Adresse. Somit muss die Zuordnung des ersetzenden One-Wire-Devices zur USV-Einheit "01" neu eingetragen werden. Andernfalls meldet der Master ein Fehlen des One-Wire-Devices für die USV-Einheit "01" und ein neues One-Wire-Device mit unbekannter Zuordnung. Dies ist ein Problem des Standes der Technik und erfordert störenden Mehraufwand, wenn beispielsweise zwecks maximaler Verfügbarkeit im Fehlerfall komplette USV-Einheiten mit passend darin vormontierten One-Wire-Devices getauscht werden sollen. Bei One-Wire-Bus-Installationen mit vielen, insbesondere baugleichen One-Wire-Devices besteht die Schwierigkeit, die individuellen One-Wire-Devices voneinander zu unterscheiden und topologisch zuzuordnen. Insbesondere, wenn mehrere - insbesondere baugleiche - One-Wire-Devices potentiell gefährliche Zustände wie z.B. Kohlenmonoxid-Konzentrationen überwachen, und bei gefährlichem Status alarmierende Rückmeldungen ausgeben sollen, können falsche funktionelle Zuordnungen fatale Folgen haben.

Normalerweise ist dem Busmaster die Device Familie jedes einzelnen am Bus angeschlossenen One-Wire-Devices bekannt, weil die Device Familie in der Identifikations-Adresse jedes Devices codiert ist. Weitere eventuell vorliegende Informationen zu einem einzelnen One-Wire-Device müssen wie geschildert einzeln und von Hand in den Busmaster eingegeben werden, was einen fehleranfälligen, aufwändigen und manuell zu erledigenden Prozess darstellt.

Aus der EP 3 392 085 A1 ist eine Steuereinheit mit mehreren Sensoreinheiten oder Aktuatoreinheiten für einen Nutzfahrzeuganhänger bekannt, bei dem ein one-wire-Bus eingesetzt wird.

Der vorliegenden Erfindung liegt daher die Aufgabe zu Grunde, eine Vorrichtung vorzuschlagen, bei der One-Wire-Devices besonders einfach austauschbar und durch andere One-Wire-Devices ersetzbar sind.

Diese Aufgabe wird durch die Merkmale des Anspruches 1 gelöst. Erfindungsgemäße One-Wire-Devices weisen neben den beschriebenen Datenendpunkten einen oder mehrere zusätzliche Datenendpunkte auf, die mit speziellen Kommandos auslesbar und/oder beschreibbar sind, und die vom Busmaster beim Hochfahren des Busses neben den Identifikationsadressen und Prüfsummen abfragbar sind und von ihm funktionell zugeordnet werden, wobei der Busmaster bei einem Austausch eines One-Wire-Devices die automatische funktionelle Zuordnung durchführend ist, falls das ausgetauschte und das eingewechselte One-Wire-Device dieselbe logische Adresse und miteinander kompatible Device Familien aufweisen.

Die zusätzlichen Datenendpunkte sind erfindungsgemäß Read Only-Speicher, welche die Typenbezeichnung, das Herstellungs-Los, das Herstellungs-Datum des Devices enthalten. Andere erfindungsgemäße zusätzliche Datenendpunkte sind Kalibrations-Daten zu einem oder mehreren auf einem Device befindlichen Sensor-AD-Wandler-Datenendpunkten, zu einem oder mehreren auf einem Device befindlichen DA-Wandler-Datenendpunkten, oder zu einem oder mehreren auf einem Device befindlichen PWM-Signal-Datenendpunkten.

In Weiterbildung der Erfindung können diese zusätzlichen Datenendpunkte mit Kalibrationsdaten entweder nur vom Hersteller oder beispielsweise in einer speziellen Hardwareumgebung und/oder einer speziellen Softwareumgebung zur Kalibration auch durch den Anwender beschrieben werden. Dadurch wird sichergestellt, dass ein versehentliches oder böswilliges Überschreiben der Kalibrationsdaten nur während des Kalibrationsvorgangs möglich, im laufenden Betrieb aber hardwaremäßig ausgeschlossen ist.

Die Speicherung von Herstellungs- und Kalibrationsdaten in den erfindungsgemäßen One-Wire-Devices selbst erleichtert ein automatisches Qualitätsmanagement, Lifetime-Management und Risiko-Management sowie eine Nachvollziehbarkeit der Aussagekraft von Messwerten ohne aufwändige Medienbrüche.

Eine weitere Kategorie von zusätzlichen Datenendpunkten der weitergebildeten Erfindung sind eine oder mehrere auslesbare Kennungen, die als eine oder mehrere logische Adressen von One-Wire-Devices dienend sind. Die logische Adresse ist beispielsweise eine Zahl, ein mnemonischer Code oder eine Klartext-Bezeichnung für einen Aufstellungsort oder für eine Aufgabe oder für eine Funktion eines gegebenen One-Wire-Devices.

Wenn bei einem Austausch eines One-Wire-Devices das ausgetauschte und das eingewechselte One-Wire-Device dieselbe logische Adresse und miteinander kompatible Device Familien aufweisen, führt der Busmaster erfindungsgemäß im Rahmen eines als Auto-E-Connect bezeichneten Prozesses eine automatische funktionelle Zuordnung durch, so dass die Nachteile des Standes der Technik vermieden sind und ein schneller und äußerst fehlerarmer Austausch eines One-Wire-Devices gegen ein anderes ermöglicht ist. Mit anderen Worten ist der erfindungsgemäße Busmaster aufgrund der erweiterten Informationen der unterschiedlichen Devices in die Lage versetzt, die Datenübernahme automatisch durchzuführen.

Die logische Adresse eines One-Wire-Devices ist in Ausgestaltung der Erfindung auf mindestens drei Arten eingeb- und änderbar:
- der Hersteller des One-Wire-Devices trägt dessen logische Adresse bei dessen Herstellung irreversibel ein, ggf. mit vom Anwender vorgegebenem Inhalt. Danach kann die logische Adresse nur gelesen, aber nicht mehr verändert werden;
- Der Anwender vergibt und schreibt die logische Adresse des One-Wire-Devices nach seinen Bedürfnissen in das One-Wire-Device, wobei dieser Schreibvorgang vorzugsweise jedoch nur in einer speziellen Hardwareumgebung und/oder einer speziellen Softwareumgebung ermöglicht ist. Ein lesender Zugriff ist in diesem Fall auch im laufenden Betrieb ermöglicht;
- Der Anwender konfiguriert oder rekonfiguriert die logische Adresse eines One-Wire-Devices im laufenden Betrieb über den One-Wire-Bus, wobei das Überschreiben vorzugsweise passwortgeschützt ist, ein Lesen aber jederzeit ermöglicht ist.

Eine weitere erfindungsgemäße Kategorie von zusätzlichen Datenendpunkten in One-Wire-Devices erleichtert dem Anwender die Verifizierung der Konsistenz ausgedehnter One-Wire-Bus-Installationen mit vielen, insbesondere baugleichen, One-Wire-Devices. Insbesondere dann, wenn mehrere baugleiche One-Wire-Devices potentiell gefährliche Zustände überwachen und bei gefährlichem Status alarmierende Rückmeldungen ausgeben, können falsche funktionelle Zuordnungen fatale Folgen haben. Es ist daher erfindungsgemäß vorgesehen, mit Messsensoren ausgestattete One-Wire-Devices mit zusätzlichen Datenendpunkten auszustatten, die das Device identifizierende Aktuatoren für Alarm- und/oder Statusmeldungen und/oder für identifizierende Eingaben aufweisen. Mit Hilfe derartiger erfindungsgemäßer Datenendpunkte ist es ermöglicht, dass der Master bei einer Installation an einem selektierten One-Wire-Device ein erkennbares Signal wie das Aufleuchten einer LED auslösend ist, um einem Benutzer anzuzeigen, ob tatsächlich das gewünschte One-Wire-Device reagiert.

In Ausgestaltung der Erfindung ist der Busmaster mittels eines einfachen oder eines n-Tupels dezidierter Aktuatoren am einzelnen One-Wire-Device identifizierende Aktionen auslösend, wie z.B. das Leuchten oder Blinken von Leuchtdioden, das Anzeigen eines oder mehrerer Zeichen in einem Display, das Aussenden eines Tons oder einer Tonfolge über einen akustischen Wandler und anderes mehr. Diese dienen sämtlich dazu, das angesprochene One-Wire-Device und/oder den vorgesehenen Installationsort und/oder die vorgesehene Funktion des One-Wire-Devices zu identifizieren und einem Nutzer kenntlich zu machen.

In Ausgestaltung der Erfindung sind eine weitere Kategorie zusätzlicher Datenendpunkte in One-Wire-Devices Sensoren, analog oder bevorzugt dezidierte binäre Sensoren oder einfach oder n-Tupel dezidierter Aktuatoren, die als Sensor-Finder dienend sind. Mittels eines dezidierten binären Sensors und eines Eingabegerätes, wie z.B. einer Taste am One-Wire-Device ist so auf dem Busmaster oder auf einer hierarchisch höheren Netzebene ein Anzeigeprozess auslösbar, welcher die Identität und die funktionelle Zuordnung des entsprechenden One-Wire-Devices erkennend ist.

Diese erfindungsgemäßen Ausgestaltungen verhindern sämtlich einen worst case, bei dem z.B. in Raum A ein gefährlicher Zustand gemessen, wegen falscher funktioneller Zuordnung des One-Wire-Devices mit dem Sensor oder eines separaten One-Wire-Devices mit einem Alarm-Aktor der Alarm aber in Raum B ausgelöst wird, was entsprechend verheerende Folgen haben kann.

Die Funktion aller oben beschriebenen erfindungsgemäßen zusätzlichen Datenendpunkte in den einzelnen One-Wire-Devices ist kompatibel mit der Funktion von One-Wire-Devices ohne die zusätzlichen Datenendpunkte der Erfindung, so dass ein erfindungsgemäßes Bussystem auch in einem Mischbetrieb aus erfindungsgemäßen und nicht-erfindungsgemäßen devices betreibbar ist.

Eine weitere Kategorie von zusätzlichen Datenendpunkten in einem One-Wire-Device sind Speicher mit Informationen zur Verschlüsselung des Datenverkehrs zwischen dem Busmaster und dem One-Wire-Device dar. Dadurch ist es möglich, den Datenverkehr zwischen dem Busmaster und jedem einzelnen One-Wire-Device am Bus individuell zu verschlüsseln. Diese Ausgestaltung ist nur bedingt rückwärts kompatibel zu existierenden Standard One Wire Installationen.

Die Erfindung wird in einer bevorzugten Ausführungsform unter Bezugnahme auf folgende Figuren beispielhaft beschrieben, wobei weitere vorteilhafte Einzelheiten den Figuren zu entnehmen sind. Funktionsmäßig gleiche Teile sind dabei mit den gleichen Bezugszeichen versehen.

Die Figur zeigt im Einzelnen:

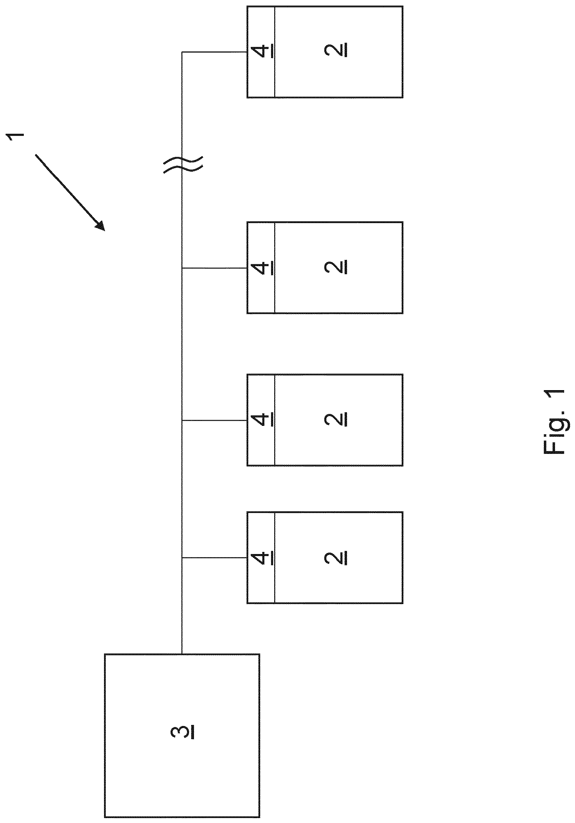

- Fig. 1: Schematischer Aufbau einer erfindungsgemäßen Vorrichtung.

Fig. 1 zeigt einen schematischen Aufbau einer erfindungsgemäßen Vorrichtung 1, aufweisend einen Busmaster 3, der auf eine Vielzahl von One-Wire-Devices 2 zugreifend ist, wobei jedes One-Wire-Device 2 mindestens einen Datenendpunkt 4 aufweist. Die Datenendpunkte 4 können dabei auf unterschiedlichste Weise ausgestaltet sein. Einzelheiten dazu können der Beschreibung und den Ansprüchen entnommen werden.

Gegenstand der vorliegenden Schrift ist eine Vorrichtung zur vereinfachten Austauschbarkeit von One-Wire-Devices, zur Verbesserung der Qualität der Daten und zur leichteren Überprüfung der Konsistenz ausgedehnter One-Wire-Bus-Installationen mit vielen One-Wire-Devices.

### BEZUGSZEICHEN

- 1: Vorrichtung
- 2: One-Wire-Device
- 3: Busmaster
- 4: Datenendpunkt

## Patentansprüche

1. One-Wire-Bus-System (1) mit mindestens einem One-wire-Device (2), das einen Datenendpunkt mit einer Identifikationsadresse nebst Angabe der Device-Familie aufweist, **dadurch gekennzeichnet, dass** mindestens ein One-Wire-Device (2) einen oder mehrere zusätzliche Datenendpunkte (4) aufweist, die vom Busmaster beim Hochfahren des Busses neben den Identifikationsadressen und Prüfsummen abfragbar sind und von ihm funktionell zugeordnet werden und die mit speziellen Kommandos auslesbar und/oder beschreibbar sind, wobei diese zusätzlichen Datenendpunkte (4) gewählt sind aus der Gruppe gebildet durch mindestens einen oder mehrere von: Speichern mit Informationen über das jeweilige One-Wire-Device (2), Sensoren, Eingabegeräten, Aktuatoren, wobei der Busmaster (3) bei einem Austausch eines One-Wire-Devices (2) die automatische funktionelle Zuordnung durchführend ist, falls das ausgetauschte und das eingewechselte One-Wire-Device (2) dieselbe logische Adresse und miteinander kompatible Device Familien aufweisen.

2. One-Wire-Bus-System (1) nach Anspruch 1, **dadurch gekennzeichnet, dass** die Informationen gewählt sind aus der Gruppe gebildet durch:
- das Fertigungs-Los,
- das Fertigungs-Datum,
- eine oder mehrere auslesbare Kennungen als logische Adresse des One-Wire-Devices (2), wobei die logische Adresse in Form von Zahlen, mnemonischen Codes oder Klartext ausgebildet ist,
- Kalibrationsdaten zu einem ggf. auf dem One-Wire-Device (2) befindlichen Sensor,
- Angaben über einen speziellen Aufstellungsort und damit verbundene spezielle Aufgaben und Funktionen des One-Wire-Devices (2),
- Informationen zur Verschlüsselung des Datenverkehrs zwischen dem Busmaster (3) und dem jeweiligen One-Wire-Device (2).

3. One-Wire-Bus-System (1) nach Anspruch 2, **dadurch gekennzeichnet, dass** die Sensoren beim Hochfahren des Busmasters (3) von diesem auslesbar sind und/oder dass die Kalibrationsdaten insbesondere Kalibrations-Zeitpunkt, Messbereich, Offset, Steigung oder Look-Up-Table sind.

4. One-Wire-Bus-System nach Anspruch 2 oder 3, **dadurch gekennzeichnet, dass** die Kalibrationsdaten uneingeschränkt vom Busmaster (3), insbesondere nur vom Hersteller, und/oder nur in einer speziellen Hardwareumgebung oder eingeschränkt von einem Anwender nur in einer speziellen, zur Kalibration vorgesehenen Softwareumgebung in den entsprechenden Datenendpunkt (4) des One-Wire-Devices (2) schreibbar sind.

5. One-Wire-Bus-System (1) nach einem der vorangegangenen Ansprüche, **dadurch gekennzeichnet, dass** die logische Adresse eines One-Wire-Devices (2) entweder bei dessen Herstellung irreversibel eingetragen ist oder von einem Anwender nachträglich vergeben und in das One-Wire-Device (2) geschrieben ist.

6. One-Wire-Bus-System (1) nach Anspruch 4, **dadurch gekennzeichnet, dass** die logische Adresse eines One-Wire-Devices (2) im laufenden Betrieb vom Busmaster (3) überschreibbar ist, insbesondere nur passwortgeschützt überschreibbar ist.

7. One-Wire-Bus-System (1) nach einem der vorangegangenen Ansprüche, **dadurch gekennzeichnet, dass** die Sensoren (4) analoge Sensoren, bevorzugt jedoch binäre Sensoren sind.

8. One-Wire-Bus-System (1) nach einem der vorangegangenen Ansprüche, **dadurch gekennzeichnet, dass** die zusätzlichen Datenendpunkte (4) Kombinationen aus Sensoren und Eingabegeräten aufweisen, insbesondere eine oder mehrere Tasten am One-Wire-Device (2), die als Sensor-Finder dienend sind, indem sie auf dem Busmaster (3) oder auf einer hierarchisch höheren Netzebene Anzeigeprozesse auslösend sind, anhand derer die Identität und die funktionelle Zuordnung des entsprechenden One-Wire-Devices (2) überprüfbar ist.

9. One-Wire-Bus-System (1) nach einem der vorangegangenen Ansprüche, **dadurch gekennzeichnet, dass** die zusätzlichen Datenendpunkte (4) Aktuatoren als Sensor-Finder aufweist, insbesondere mittels derer der Busmaster (3) am einzelnen One-Wire-Device (2) identifizierende Aktionen auslösend ist gewählt aus der Gruppe gebildet durch: das Leuchten oder Blinken von Leuchtdioden, die Anzeige eines oder mehrerer Zeichen in einem Display, einen Ton, eine Tonfolge, letztere vorzugsweise über einen akustischen Wandler.

## Claims

1. A one-wire bus system (1) with at least one one-wire device (2) which has a data endpoint with an identification address in addition to an indication of the device family, **characterized in that** at least one one-wire device (2) has one or multiple additional data endpoints (4) which can be interrogated by the bus master in addition to the identification addresses and checksums when the bus is starting up and which are functionally assigned by it and are readable and/or describable with special commands, wherein these additional data endpoints (4) are selected from the group formed by at least one or more of: memories with information on the respective one-wire device (2), sensors, input devices, actuators, wherein the bus master (3) performs the automatic functional allocation during an exchange of a one-wire device (2), in the event that the one-wire device (2) which has been exchanged and the one acting as the replacement have the same logic address and have device families which are compatible with one another.

2. The one-wire bus system (1) according to claim 1, **characterized in that** the information is selected from the group formed by:
- the production batch,
- the production date,
- one or multiple readable codes as the logic address of the one-wire device (2), wherein the logic address is designed in the form of numbers, mnemonic codes or plain text,
- calibration data on a sensor which may be located on the one-wire device (2),
- information on a special installation site and special responsibilities and functions of the one-wire device (2) associated with this,
- information on the encoding of the data traffic between the bus master (3) and the one-wire device (2) in each case.

3. The one-wire bus system (1) according to claim 2, **characterized in that** during the starting of the bus master (3) the sensors are readable by said bus master and/or that the calibration data, in particular the calibration time, measuring range, offset, slope or look-up table.

4. The one-wire bus system according to claim 2 or 3, **characterized in that** the calibration data can only be written to an unlimited extent by the bus master (3), in particular only by the manufacturer, and/or only in a special hardware environment or to a limited extent by a user only in a special software environment provided for calibration in the corresponding data endpoint (4) of the one-wire device (2).

5. The one-wire bus system (1) according to one of the preceding claims, **characterized in that** the logic address of a one-wire device (2) is either irreversibly registered during the production thereof or is allocated by a user subsequently and is written in the one-wire device (2).

6. The one-wire bus system (1) according to claim 4, **characterized in that** the logic address of a one-wire device (2) can be overwritten during routine operation of the bus master (3), in particular overwritten only in a password-protected manner.

7. The one-wire bus system (1) according to one of the preceding claims, **characterized in that** the sensors (4) are analog sensors, but preferably binary sensors.

8. The one-wire bus system (1) according to one of the preceding claims, **characterized in that** the additional data endpoints (4) have combinations of sensors and input devices, in particular one or multiple keys on the one-way device (2), which act as sensor finders, **in that** they trigger display processes on the bus master (3) or on a higher hierarchical network layer, with the help of which the identity and functional allocation of the corresponding one-wire device (2) can be checked.

9. The one-wire bus system (1) according to one of the preceding claims, **characterized in that** the additional data endpoints (4) have actuators as sensor finders, in particular by means of which the bus master (3) triggers identifying actions on the individual one-wire device (2) chosen from the group formed by the illumination or flashing of light-emitting diodes, the display of one or multiple symbols in a display, a sound, a sequence of sounds, said sequence of sounds preferably via an acoustic transducer.

## Revendications

1. Système de bus monofilaire (1) comportant au moins un appareil monofilaire (2), qui présente un terminal de données avec une adresse d'identification ainsi que des informations relatives à la famille d'appareils, **caractérisé en ce que** au moins un appareil monofilaire (2) possède un ou plusieurs terminaux de données supplémentaires (4) qui, en plus des adresses d'identification et des sommes de contrôle, peuvent être interrogés par le maître de bus lors du démarrage du bus et sont fonctionnellement affectés par lui et qui peuvent être lus et/ou sont inscriptibles avec des commandes spéciales, dans lequel ces terminaux de données supplémentaires (4) sont sélectionnés dans le groupe formé par au moins un ou plusieurs des éléments suivants : stockage d'informations sur le dispositif monofilaire respectif (2), capteurs, dispositifs d'entrée, actionneurs, dans lequel le maître de bus (3) dans le cas d'un échange d'un appareil monofilaire (2) effectue l'affectation fonctionnelle automatique si l'appareil monofilaire échangé et l'appareil échangé (2) présentent la même adresse logique et des familles d'appareils mutuellement compatibles.

2. Système de bus monofilaire (1) selon la revendication 1, **caractérisé en ce que** les informations sont sélectionnées parmi les groupes formés par :
- le lot de fabrication,
- la date de fabrication,
- un ou plusieurs identifiants lisibles comme adresse logique du dispositif monofilaire (2), dans lequel l'adresse logique se présente sous forme de chiffres, de codes mnémoniques ou de texte en clair,
- des données d'étalonnage relatives à un capteur se trouvant le cas échéant sur le dispositif monofilaire (2),
- des informations relatives à un site d'installation spécial et aux tâches et fonctions spéciales associées de l'appareil monofilaire (2),
- des informations relatives au cryptage du trafic de données entre le maître de bus (3) et l'appareil monofilaire respectif (2).

3. Système de bus monofilaire (1) selon la revendication 2, **caractérisé en ce que** les capteurs lors du démarrage du maître de bus (3) peuvent être lus par celui-ci et/ou que les données d'étalonnage sont en particulier le temps d'étalonnage, la plage de mesure, le décalage, le gradient ou la table de consultation.

4. Système de bus monofilaire selon la revendication 2 ou 3, **caractérisé en ce que** les données d'étalonnage provenant du maître de bus (3), peuvent être écrites en particulier uniquement par le fabricant et/ou uniquement dans un environnement matériel spécial ou limité par un utilisateur uniquement dans un environnement logiciel spécial prévu pour l'étalonnage dans le terminal de données correspondant (4) de l'appareil monofilaire (2).

5. Système de bus monofilaire (1) selon une quelconque des revendications précédentes, **caractérisé en ce que** l'adresse logique d'un dispositif monofilaire (2) est soit saisie de manière irréversible lors de sa fabrication, soit attribuée ultérieurement par un utilisateur et est écrite dans l'appareil monofilaire (2) .

6. Système de bus monofilaire (1) selon la revendication 4, **caractérisé en ce que** l'adresse logique d'un appareil monofilaire (2) peut être écrasée en fonctionnement par le maître de bus (3), en particulier ne peut être écrasée qu'avec une protection par mot de passe.

7. Système de bus monofilaire (1) selon une quelconque des revendications précédentes, **caractérisée en ce que** les capteurs (4) sont des capteurs analogiques, de préférence néanmoins des capteurs binaires.

8. Système de bus monofilaire (1) selon une quelconque des revendications précédentes, **caractérisé en ce que** les terminaux de données supplémentaires (4) présentent des combinaisons de capteurs et de périphériques d'entrée, en particulier un ou plusieurs boutons sur le dispositif monofilaire (2), qui sont utilisés comme détecteurs de capteurs en déclenchant des processus d'affichage sur le maître de bus (3) ou sur un niveau de réseau hiérarchiquement supérieur, sur la base desquels l'identité et l'affectation fonctionnelle de l'appareil monofilaire correspondant (2) est vérifiable.

9. Système de bus monofilaire (1) selon une des revendications précédentes, **caractérisé en ce que** les terminaux de données supplémentaires (4) présentent des actionneurs en tant que détecteurs de capteurs, en particulier au moyen desquels le maître de bus (3) sur l'appareil monofilaire individuel déclenche (2) des actions d'identification sélectionnées parmi le groupe formé par : l'allumage ou le clignotement de diodes électroluminescentes, l'affichage d'un ou plusieurs caractères dans un écran, une tonalité, une séquence de tonalités, cette dernière de préférence via un convertisseur acoustique.
